# EUROPEAN PATENT SPECIFICATION

(11) **EP 1 702 851 B1**
(45) Date of publication and mention of the grant of the patent: **02.05.2012**
(21) Application number: 04820172.7
(22) Date of filing: 06.12.2004
(51) Int. Cl.: B65D 6/06, A45D 33/20

(54) **Push-action slide case**
Druckknopfbetätigte Schublade
Boîtier coulissant actionné par bouton-poussoir

(30) Priority: 08.12.2003 JP 2003409655
(43) Date of publication of application: 20.09.2006
(73) Proprietor: YOSHIDA INDUSTRY CO., LTD., Tokyo 131-0043 (JP)
(72) Inventor: YUHARA, Yukitomo, 2701144 (JP); TOKUSHITA, Takayuki, 1240024 (JP)
(74) Representative: Charlton, Peter John
(86) International application number: PCT/JP2004/018135
(87) International publication number: WO 2005/056398

(56) References cited:
- EP-A- 0 286 713
- EP-A- 0 538 503
- DE-A1- 3 426 351
- JP-U- 59 089 826
- JP-U- 61 202 382
- US-A- 3 288 115

## Description

### FIELD OF THE INVENTION

The present invention relates to a push-action slide case having excellent productivity and capable of assuring reliable push-into/eject-out operation of a storage body even for long term use.

### BACKGROUND ART

As a slide case which consists of a combination of a main case body and a storage body adapted to be taken into/out of the main case body through an opening of the same, there is known an example disclosed in Japanese Utility Model Publication of Examined Application No. 7-25297. In this document, a slide-in/out type case mainly comprises a main case body having an opening on its one side, and a storage tray adapted to be slidably taken out of the main case body through the opening and to be pushed into the opening to be contained within the main case body. In this slide case, an urging means for constantly pushing the storage tray outward is provided between the main case body and the storage tray, and a swing arm having an engagement means is swingablly integrally attached in a protruding condition on either surface of the facing sides of the main case body and the storage tray, and on the other corresponding side, a curved guide ditch adapted to guide the swing arm making the arm swing and another engagement means for being engaged with the engagement means are provided. In this structure, guiding the swing arm into the curved guide ditch and engaging the engagement means with the other enable to securely keep the storage tray contained within the main case body, and then further push-into operation of the storage tray moves the swing arm again to disengage the engagement means from the other so that the storage tray can be ejected out of the main case body.

EP-A-0286713 describes a push action slide case according to the preamble of claim 1 said case having means for accommodating a plurality of cards and means for at least partially ejecting each card from the case. A separate compartment is provided in the case for each card, a spring being provided in each compartment and each said spring being tensioned and restrained when the card is pushed into the compartment, and detent means being provided to retain each card in its respective compartment against the force of the associated spring whereby, when the detent is released, the spring is effective to eject the card from the compartment. A separate drawer is desirably provided for each card in the case. Preferably, a spring and a detent means are associated with each drawer, each said spring being tensioned and restrained when the associated drawer is pushed into the case and the detent means being arranged to hold the drawer in the case against the force of the spring and said spring being effective, when the detent means is released, to push the drawer out of the case to release a card held in the drawer.

EP-A-0538503 discloses a rotary-cam ball-point pen having an outer sleeve, a rotary-cam mechanism comprised of a cam body provided on the inside of the outer sleeve, a rotary-cam engaging the cam body, and a cam bar engaging the rotary-cam, and a refill. The rear portion of the refill is loaded backward by an elastic body inserted into the rotary-cam. The cam bar has a structure with flexibility in which the cam bar can be distorted inward by applying a radial force.

### DISCLOSURE OF THE INVENTION

### OBJECT

In the above-mentioned related art, there is a problem with its productivity where, in combining the storage tray and the main case body by inserting the storage tray through the opening into the main case body, the swing arm can not be easily guided into the curved guide ditch due to its swing movement. In addition, another problem is pointed out. That is, because the push-into/eject-out operation of the storage tray is repeated many times, the swing arm is easily worn out due to its swing movement repeated along with such operations, resulting in deteriorated engagement function of the swing arm being guided into the curved guide ditch and the pair of engagement means being engaged. Therefore, the functionality of keeping the storage tray contained within the main case body may be lost early, and with this disadvantage, the slide case becomes unsuitable for long term use.

The present invention has been contrived in consideration of the above-mentioned circumstance. It is an object of the present invention to provide a push-action slide case having excellent productivity and capable of assuring reliable push-into/eject-out operation of a storage body even for long term use.

### SOLUTION

According to the present invention, there is provided a push-action slide case, comprising: a hollow main case body having an opening on one side thereof; a storage body slidably placed in the main case body, the storage body adapted to be pushed into the inside of the main case body through the opening toward the other side of the main case body; and a first urging member to constantly push the storage body so that the storage body be ejected from the main case body; characterized in that the push-action slide case further comprises: a cylindrical positioner which is integrally formed on the storage body in a shape protruding in the direction of the push-into operation of the storage body; positioning ditches which are formed along the periphery of the positioner, a cylindrical rotator which is disposed so as to abut against the positioner along the direction of the push-into operation of the storage body in such a manner to be able to perform relative rotation to the positioner; engagement projections which are formed along the periphery of the rotator, adapted to be detachably engaged with the positioning ditches to determine an attachment position where the rotator is locked into the positioner by the engagement projections being engaged with the positioning ditches, and then to be disengaged from the positioning ditches by the rotator performing the relative rotation to the positioner; a second urging member to constantly push the rotator toward the positioner along the direction of the push-into operation of the storage body in order to engage the engagement projections with the positioning ditches to lock the rotator into the positioner at the attachment position, at least one rotation-generating projection formed on the rotator, adapted to make the rotator perform the relative rotation to the positioner against the urging force of the second urging member; and a holder which is fixedly attached to the main case body, having a cylindrical inner surface where at least one control projection adapted to work with the rotation-generating projection is formed in order to realize keeping the storage body contained within the main case body against the urging force of the first urging member so as to unlock that state anytime, through the positioner and the rotator which move in accordance with the push-into operation of the storage body, wherein the control projection has a pair of end faces to define, on the cylindrical inner surface, guide passages which guide the rotation-generating projection from an entrance to an exit along the direction of the push-into operation of the storage body; on either one of the two end faces, at the entrance of the guide passage, there is formed a first abutting face which leads, into the guide passage, the rotation-generating projection which moves from the entrance of the guide passage to the exit according to the push-into operation of the storage body, pushing the rotation-generating projection for the rotator to perform the relative rotation in a normal direction against the urging force of the second urging member; at the exit of the guide passage, there is formed a latch ditch with which the rotation-generating projection is locked against the urging force of the second urging member after passing through the guide passage from the entrance to the exit, and from which the rotation-generating projection is unlocked in response to further push-into operation of the storage body; and on the other out of the two end faces, at the exit of the guide passage, there is formed a second abutting face which guides, into the guide passage, the rotation-generating projection which receives the urging force of the first urging member and goes through the guide passage from the exit to the entrance after being unlocked from the latch ditch, pushing the rotation-generating projection for the rotator to perform the relative rotation in the reverse direction against the urging force of the second urging member.

### BRIEF DESCRIPTION OF THE DRAWINGS

Fig. 1 is a perspective view showing a preferred embodiment of a push-action slide case according to the present invention;
Fig. 2 is a cross-sectional plan view of the push-action slide case shown in Fig. 1;
Fig. 3 is a cross-sectional side view of the push-action slide case shown in Fig. 1;
Fig. 4 is an exploded perspective view with regard to main parts of the push-action slide case shown in Fig. 1;
Fig. 5 is a plan view of the push-action slide case shown in Fig. 1 with the main parts enlarged, in a state of a storage body kept contained;
Fig. 6 is a plan view of the push-action slide case shown in Fig. 1 with the main parts enlarged, in a state of the storage body ejected out.

### DESCRIPTION OF THE REFERENCE NUMBERS

- 1: Push-action slide case
- 2: Opening
- 3: Main case body
- 4: Storage body
- 5: First spring
- 6: Positioner
- 7: Positioning ditch
- 8: Rotator
- 9: Engagement projection
- 10: Second spring
- 11: Rotation-generating projection
- 12: Control projection
- 12a, 12b: A pair of end faces on the control projection
- 13: Holding block
- 14: Guide passage
- 15: Fist abutting face
- 16: Latch ditch
- 17: Second abutting face

### BEST MODE FOR CARRYING OUT THE INVENTION

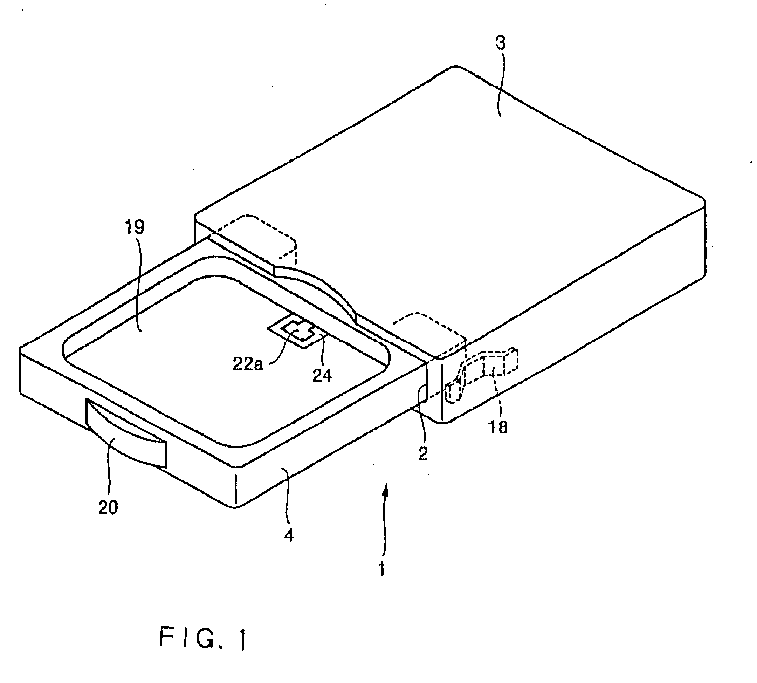

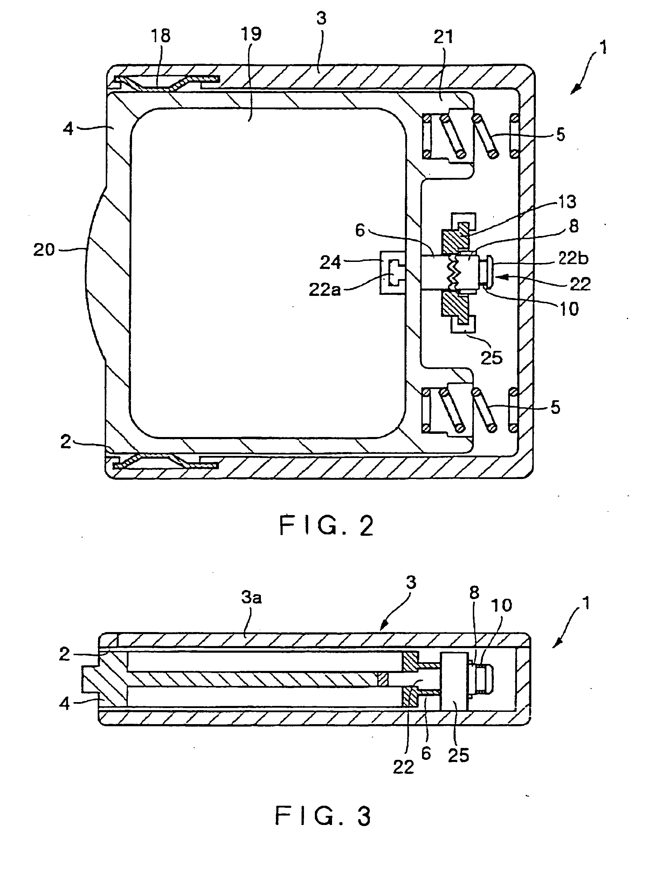

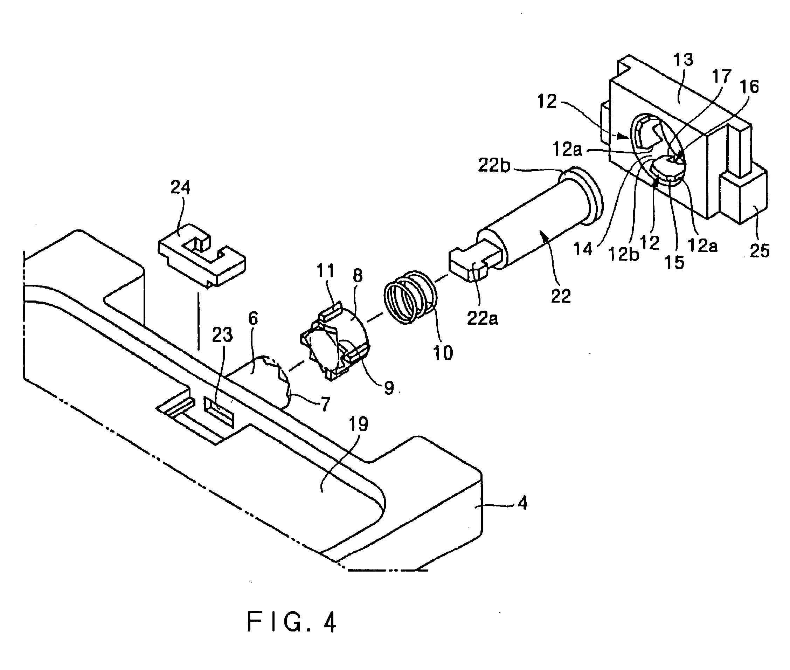

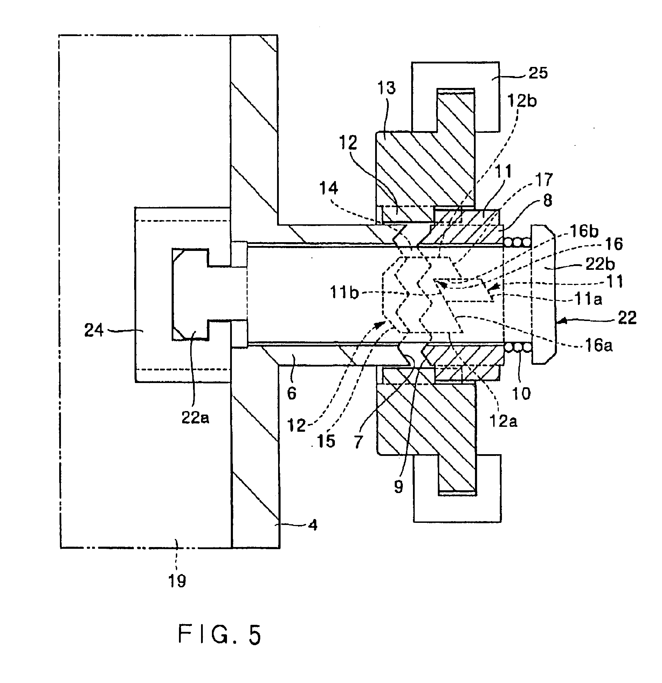

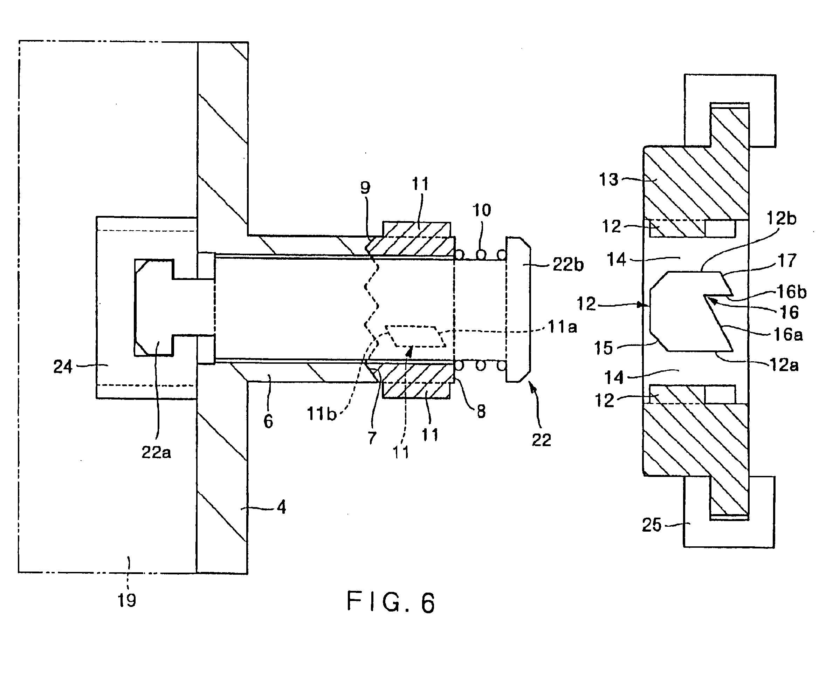

In the following, a preferred embodiment of a push-action slide case according to the present invention is described in detail with reference to the accompanying drawings. As shown in Figs. 1 to 6, a push-action slide case 1 of the present embodiment basically comprises a hollow main case body 3 having an opening 2 on its one side, a storage body 4 slidably placed in the main case body 3 and adapted to be pushed into the inside of the main case body 3 through the opening 2 toward the other side of the main case body 3, first springs 5 as first urging members to constantly push the storage body 4 for it to be ejected from the main case body 3, a cylindrical positioner 6 which is integrally formed on the storage body 4 in a shape protruding in the direction of the push-into operation of the storage body 4, positioning ditches 7 which are formed along the periphery of the positioner 6, a cylindrical rotator 8 which is disposed so as to abut against the positioner 6 along the direction of the push-into operation of the storage body 4 in such a manner to be able to perform relative rotation to the positioner 6, engagement projections 9 which are formed along the periphery of the rotator 8 and adapted to be detachably engaged with the positioning ditches 7 to determine an attachment position where the rotator 8 is locked into the positioner 6 by the engagement projections 9 being engaged with the positioning ditches 7, and then to be disengaged from the positioning ditches 7 by the rotator 8 performing relative rotation to the positioning member 6, a second spring 10 as a second urging member to constantly push the rotator 8 toward the positioner 6 along the direction of the push-into operation of the storage body 4 in order to engage the engagement projections 9 with the positioning ditches 7 to lock the rotator 8 into the positioner 6 at the attachment position, at least one rotation-generating projection 11 provided on the rotator 8, adapted to make the rotator 8 perform relative rotation to the positioner 6 against the urging force of the second spring 10, a holding block 13 as a holder which is fixedly attached to the main case body 3 and has a cylindrical inner surface where at least one control projection 12 adapted to work with the rotation-generating projection 11 is formed in order to realize keeping the storage body 4 contained within the main case body 3 against the urging force of the first springs 5 in such a manner to be able to unlock that state anytime, through the positioner 6 and the rotator 8 which move in accordance with the push-into operation of the storage body 4. The control projection 12 has a pair of end faces 12a and 12b to define, on the cylindrical inner surface, a guide passage 4 which guides the rotation-generating projection 11 from the entrance to the exit along the direction of the push-into operation of the storage body 4. On the end face 12a, which is either one of the two end faces, a first abutting face 15 is formed at the entrance of the guide passage 14. The first abutting face 15 leads the rotation-generating projection 11 into the guide passage 14 when the projection 11 enters into the entrance of the guide passage 14 toward the exit according to the push-into operation of the storage body 4, pushing the projection 11 for the rotator 8 to perform relative rotation in a normal direction against the urging force of the second spring 10. In addition, at the exit of the guide passage 14, there is formed a latch ditch 16, with which the rotation-generating projection 11 is locked against the urging force of the second spring 10 after the projection 11 passes through the guide passage 14 from the entrance to the exit, and from which the projection 11 is unlocked in response to the further push-into operation of the storage body 4. Meanwhile, on the end face 12b, which is the other face from the end face 12a, a second abutting face 17 is formed at the exit of the guide passage 14. The second abutting face 17 guides the rotation-generating projection 11 into the guide passage 14, when the projection 11 receives the urging force of the first springs 5 to go through the guide passage 14 from the exit to the entrance after being unlocked from the latch ditch 16, pushing the projection 11 for the rotator 8 to perform relative rotation in a reverse direction against the urging force of the second spring 10.

The main case body 3 is formed in a hollow cuboid shape, and has the opening 2 formed at its front wall. In addition, near the opening 2 of the main case body 3, a pair of elastic pieces 18 are respectively disposed so as to slightly protrude from the left and right walls of the main case body 3 toward the inside. The storage body 4 is formed in a flat plate-like rectangle shape having a storage part 19. A handle projection 20 is formed on the front end face of the storage body 4, on the end face exposed from the opening 2 when the storage body 4 is contained in the main case body 3, while on the back end face of the storage body 4, cylindrical parts 21 are formed as a left and right pair, so that the front edges of the first springs 5 formed as a left and right pair are detachably inserted into the pair of the cylindrical parts 21 respectively. The storage body 4 is disposed in such a manner to be slidable into the main case body 3, being guided with the elastic pieces 18 which elastically push the storage body 4 from the left and right sides.

Specifically, the storage body 4 is adapted to be ejected from the opening 2 of the main case body 3 or to be contained within the main case body 3, by pushing the handle projection 20 to push the body 4 into the main case body 3, like pushing commonly used in a push-action ballpoint pen. The rear ends of the pair of the first springs 5 are made separably abut against the back wall of the main case body 3. The first springs 5 are pressed against the main case body 3, gaining the reactive force so as to become able to constantly push the storage body 4. With receiving the urging force from the first springs 5, the storage body 4 becomes usually urged outward from the main case body 3 through the opening 2.

On the back center of the storage body 4, the positioner 6 is integrally formed in a hollow cylindrical shape protruding in the direction of the push-into operation of the storage body 4. On the tip of the protruding positioner 6, concaves and convexes are formed in a shape of saw teeth along the outer periphery of the positioner 6, and these concaves and convexes define the plurality of positioning ditches 7. That is, each of the positioning ditches 7 is defined with a gullet made up of a pair of slope faces, which constitutes concaves and convexes in a shape of saw teeth. In addition, on the back wall of the storage body 4, a shaft 22 is disposed so as to penetrate the positioner 6 and protrude from the part 6. The shaft 22 has a latch projection 22a on one side and a latch flange 22b on the other side, and is fixed to the storage body 4 by the latch projection 22a protruding from the positioner 6, being inserted into the storage part 19 through a penetrating hole 23 on the back wall of the storage body 4, and being held by a holding piece 24 which is attached in the storage part 19.

The cylindrical rotator 8 is rotatably supported by the shaft 22, where the rotator 8 is disposed so as to abut against the positioner 6 along the direction of the push-into operation of the storage body 4, and has the substantially same inner and outer diameters as those of the positioner 6 to be able to perform relative rotation. On the tip of the rotator 8 which faces the positioner 6, concaves and convexes are formed in a shape of saw teeth along the outer periphery of the rotator 8, in the same size as the positioning ditches 7. The concaves and convexes of the rotator 8 define the plurality of engagement projections 9, which are detachably engaged with the positioning ditches 7. That is, each of the engagement projections 9 is defined with a tooth made up of a pair of slope faces, which constitutes concaves and convexes in a shape of saw teeth. The teeth of the engagement projections 9 are disengaged from the gullets of the positioning ditches 7 by sliding up on the slope faces of those gullets, and are engaged with the gullets of the positioning ditches 7 by sliding down on the slope faces of those gullets. In this way, the engagement projections 9 are engaged with the positioning ditches 7 to determine the position where the rotator 8 is locked into the positioning body 6, and the disengagement is caused by the rotator 8 performing relative rotation to the positioner 6 and the engagement projections 9 sliding up on the slope faces of the gullets.

Between the rear end of the rotator 8 and the latch flange 22b of the shaft 22 which faces the body 8, the second spring 10 is disposed in a pressed state. The second spring 10 constantly pushes the rotator 8 toward the positioner 6 along the direction of the push-into operation of the storage body 4. Due to the urging force of the second spring 10, the engagement projections 9 are engaged with the positioning ditches 7 to lock the rotator 8 into the positioner 6 at the attachment position. In addition, four rotation-generating projections 11 are formed on the rotator 8 along the outer periphery, being equally spaced apart. These rotation-generating projections 11 work together with the control projections 12 for the engagement projections 9 to be disengaged from the positioning ditches 7 against the urging force of the second spring 10 so that the rotator 8 can perform relative rotation to the positioner 6.

Meanwhile, in the main case body 3, the holding block 13 is fixedly attached into a holding piece 25 which is disposed so as to lie behind the storage body 4. The holding block 13 has a cylindrical inner surface where the positioner 6 and the rotator 8 moving according to the push-into operation of the storage body 4 can be detachably inserted. On this cylindrical inner surface, four control projections 12, as many as the rotation-generating projections 11, are formed along the inner periphery of the holding block 13. These control projections 12 work together with the rotation-generating projections 11 to keep the storage body 4 contained within the main case body 3 against the urging force of the first springs 5 after the body 4 is pushed into, or to unlock that state in response to the further push-into operation of the storage body 4 and allow the first springs 5 to urge the storage body 4 outward from the main case body 3.

Each of the control projections 12 includes a pair of end faces 12a and 12b which are disposed so as to face each other along the periphery of the cylindrical inner surface, a first abutting face 15 which is formed on the end face 12a so as to lie on the side of the front end face of the projection 12 to face up to the storage body 4, a second abutting face 17 which is formed on the other end face 12b so as to lie on the side of the opposite rear end face, and the latch ditch 16 which is formed on the back end face. The pair of the end faces 12a and 12b define the guide passage 14 along the direction of the push-into operation of the storage body 4, between the end faces 12a and 12b of the adjacent control projections 12, which face each other along the periphery of the cylindrical inner surface. The guide passage 14 has an entrance between the front edges of the end faces 12a and 12b, and an exit between the rear ends of them, and guides the rotation-generating projection 11 from the entrance to the exit along the direction of the push-into operation of the storage body 4.

The first abutting face 15 lies at the entrance of the guide passage 14, and is formed by making an incline from the end face 12a to the front end face of the control projection 12. On the rotation-generating projection 11, a first slope 11a is formed so as to fit the first abutting face 15 when abutting against it. In addition to that, on the rotation-generating projection 11, a second slope 11b is formed so as to fit the second abutting face 17 when abutting against it, lying opposite from the first slope 11a. When the rotator 8 is inserted into the holding block 13 in response to the push-into operation of the storage body 4, and the first abutting face 15 is abutted by the first slope 11a of the rotation-generating projection 11 on the rotator 8 which is moving through the guide passage 14 from the entrance to the exit, then the first abutting face 15 leads the rotation-generating projection 11 into the guide passage 14, pushing the projection 11 along the periphery of the cylindrical inner surface so as for the rotator 8 to perform relative rotation in the normal direction (one way) against the urging force of the second spring 10.

The latch ditch 16 lies at the exit of the guide passage 14, comprising a guide slope 16a to guide the second slope 11b, and a rotation-stop face 16b. The latch ditch 16 is adapted to detachably lock the rotation-generating projection 11. The guide slope 16a leads the rotation-generating projection 11 into the latch ditch 16, while the rotation-stop face 16b stops the rotation of the rotator 8 in the state where the engagement projections 9 of the rotator 8 and the positioning ditches 7 of the positioner 6 are misaligned, that is, the engagement projections 9 are disengaged from the positioning ditches 7. Once reaching the exit of the guide passage 14 by the push-into operation of the storage body 4, the rotation-generating projection 11 comes off the control projection 12. If the push-into operation of the storage body 4 is stopped at this point, then the urging forces of the first springs 5 and the second spring 10 start to affect. With receiving the urging force of second spring 10, the rotator 8 performs relative rotation to the positioner 6 in the reverse direction (opposite direction) where the engagement projections 9 get engaged with the positioning ditches 7. By this relative rotation, the rotation-generating projection 11 moves to face up to the rear end face of the control projection 12, i.e., the latch ditch 16, and at the same time, the first springs push the whole storage body 4 including the rotator 8 outward from the main case body 3. As a result, the second slope 11b of the rotation generating projection 11 slides along the guide slope 16a, then, the rotation-generating projection 11, therefore, the whole storage body 4 is locked with the latch ditch 16, so that the storage body 4 is held contained within the main case body 3.

At this point, the reverse rotation of the rotation-generating projection 11 is paused on the way by the rotation-stop face 16b. That is, the second spring 10 is still urging this reverse rotation to go further, while the rotation-generating projection 11 is locked with the latch ditch 16. Here, if the storage body 4 is pushed again against the urging forces of the first springs 5 and the second spring 10, then the rotation-generating projection 11 starts to slide forward along the rotation-stop face 16b and is unlocked from the latch ditch 16, so that the hold state of the storage body 4 locked within the main case body 3 is broken off.

The second abutting face 17 lies at the exit of the guide passage 14, and is formed by making an incline from the end face 12b to the rear end face of the control projection 12. For the purpose of taking out the storage body 4 from the main case body 3, the further push-into operation is performed until the rotation-generating projection 11 comes off the latch ditch 16. Then, the urging force of the first springs 5 and the second spring 10 starts to affect. With receiving the urging force of the second spring 10, the rotator 8 performs the rest of the relative rotation in the reverse direction for the engagement projections 9 to get engaged with the positioning ditches 7. By this relative rotation, the second slope 11b of the rotation-generating projection 11 moves for facing the second abutting face 17 of the control projection 12, and at the same time, the first springs 5 push the whole storage body 4 including the rotator 8 toward the outside of the main case body 3.

As a result, the second slope 11b of the rotation generating projection 11 becomes to abut against the second abutting face 17. In this way, when the rotator 8 is going outside the holding block 13 by receiving the urging force of the first springs 5, the second slope 11b of the rotation-generating projection 11, in entering into the exit of the guide passage 14 toward the entrance, is made abut against the second abutting face 17. Then, the second abutting face 17 leads the rotation-generating projection 11 into the guide passage 14, pushing the projection 11 along the periphery of the cylindrical inner surface so as for the rotator 8 to further perform relative rotation in the reverse direction against the urging force of the second spring 10.

When the projection 11 gets out of the entrance of the guide passage 14, the rotator 8 gets out of the holding block 13 and performs the relative rotation by the urging force of the second spring 10 until the engagement projections 9 get engaged with the positioning ditches 7. At the same time, the storage body 4 is ejected from the opening 2 of the main body part by the urging force of the first springs 5.

In the present embodiment of the above-mentioned structure, the push-action slide case 1 functions as follows. In the state of the storage body 4 kept contained within the main case body 3, the rotation-generating projection 11 of the rotator 8 is locked with the latch ditch 16 of the control projection 12 inside the holding block 13. At this point, the storage body 4 receives the urging force of the first springs 5 pushing the storage body 4 outward from the main case body 3. From this state, for ejecting the storage body 4 from the main case body 3, the handle projection 20 should be pushed once by a user's hand. By this operation, the projection 11 is unlocked from the latch ditch 16, and then, the second slope 11b, affected by the urging force of the second spring 10, moves to face up to the second abutting surface 17 of the control projection 12. The user's hand is taken off the handle projection 20 at this point, and then, affected by the urging force of the first springs 5 and the lead of the second abutting surface 17, the projection 11 gets out of the guide passage 14 and the rotator 8 gets out of the holding block 13, then the storage body 4 is led by the elastic pieces 18 so as to be ejected from the main case body 3 through the opening 2.

From the state of the storage body 4 ejected out of the main case body 3, for containing the storage body 4 within the main case body 3, the storage body 4 should be pushed into the main case body 3 by a user's hand with use of the handle projection 20. When the storage body 4 is being pushed into, the first springs 5 start to abut against the rear wall of the main case body 3. Then, when the storage body 4 is further being pushed into, the first slope 11a of the rotation-generating projection 11 of the rotator 8 is made abut against the first abutting face 15 of the control projection 12. Affected by the first abutting face 15, the rotator 8 performs the relative rotation to the positioner 6, in being inserted into the holding block 13. When the user's hand is taken off the handle projection 20 after the rotation-generating projection 11 reaches the exit of the guide passage 14, then the projection 11 comes locked with the latch ditch 16, receiving the urging forces of the first springs 5 and the second spring 10. In this way, it is realized to get the storage body 4 into the state of being held within the main case body 3.

As understood from the above description, for the present embodiment, a swing arm which performs unstable swinging movement is no longer required, unlike the related art. Instead, the rotator 8 which mainly performs rotation movement, and the holding block 13 adapted to detachably lock the body 8 are used to enable the push-into/eject-out operation of the storage body 4. As a result, the functionality of the slide case can be securely guaranteed for long time.

Meanwhile, the push-action slide case 1 of the present embodiment is assembled as follows. For assembling the storage body 4, first, the second spring 10 is made abut against the rotator 8 which is already engaged with the positioner 6, then the shaft 22 is inserted into the storage body 4 from the side of the second spring 10, and the latch projection 22a of the shaft 22 is fixed to the storage body 4 by the holding piece 24. In addition, the first springs 5 are attached in the cylindrical parts 21. On the other hand, for the main case body 3, a ceiling part 3a as a separate body is first removed from the main case body 3, then the holding block 13 is fixed into the holding piece 25 at the bottom of the main case body 3, and the elastic pieces 18 are attached to their appropriate positions. Then, the ceiling part 3a is put back on the main case body 3 to form a box body shape. After completing assembling each of the storage body 4 and the main case body 3 in this way, the storage body 4 is inserted into the main case body 3 through the opening 2 to finish the assembly of the slide case as a whole.

Specifically, in the present embodiment, a swing arm which performs unstable swing movement is not used unlike the related art, and therefore, easy assembling is realized. Because the attachment position of the rotator 8 is determined by the positioner 6 of the storage body 4, and the holding block 13 is fixed in the main case body 3, precise positioning of the both members is not required, so that these members are readily combined, with the aid of the second spring 10. By just inserting the storage body 4 into the main case body 3 as completed, the slide case can be assembled so as to work properly; that is considerably simple and easy, and therefore, the productivity can be improved.

### INDUSTRIAL APPLICABILITY

In a push-action slide case in accordance with the present invention, it is possible to provide excellent productivity and assure reliable push-into/eject-out operation of a storage body even for long term use.

## Claims

1. A push-action slide case, comprising:
a hollow main case body (3) having an opening (2) on one side thereof;
a storage body (4) slidably placed in the main case body, the storage body adapted to be pushed into the inside of the main case body through the opening toward the other side of the main case body; and
a first urging member (5) to constantly push the storage body so that the storage body be ejected from the main case body;
**characterized in that** the push-action slide case further comprises:
a cylindrical positioner (6) which is integrally formed on the storage body in a shape protruding in the direction of the push-into operation of the storage body;
positioning ditches (7) which are formed along the periphery of the positioner;
a cylindrical rotator (8) which is disposed so as to abut against the positioner along the direction of the push-into operation of the storage body in such a manner to be able to perform relative rotation to the positioner;
engagement projections (9) which are formed along the periphery of the rotator, adapted to be detachably engaged with the positioning ditches to determine an attachment position where the rotator is locked into the positioner by the engagement projections being engaged with the positioning ditches, and then to be disengaged from the positioning ditches by the rotator performing the relative rotation to the positioner;
a second urging member (10) to constantly push the rotator toward the positioner along the direction of the push-into operation of the storage body in order to engage the engagement projections with the positioning ditches to lock the rotator into the positioner at the attachment position;
at least one rotation-generating projection (11) formed on the rotator, adapted to make the rotator perform the relative rotation to the positioner against the urging force of the second urging member; and
a holder (13) which is fixedly attached to the main case body, having a cylindrical inner surface where at least one control projection (12) adapted to work with the rotation-generating projection is formed in order to realize keeping the storage body contained within the main case body against the urging force of the first urging member so as to unlock that state anytime, through the positioner and the rotator which move in accordance with the push-into operation of the storage body,
wherein the control projection has a pair of end faces (12a, 12b) to define, on the cylindrical inner surface, guide passages (14) which guide the rotation-generating projection from an entrance to an exit along the direction of the push-into operation of the storage body;
on either one of the two end faces, at the entrance of the guide passage, there is formed a first abutting face (15) which leads, into the guide passage, the rotation-generating projection which moves from the entrance of the guide passage to the exit according to the push-into operation of the storage body, pushing the rotation-generating projection for the rotator to perform the relative rotation in a normal direction against the urging force of the second urging member;
at the exit of the guide passage, there is formed a latch ditch (16) with which the rotation-generating projection is locked against the urging force of the second urging member after passing through the guide passage from the entrance to the exit, and from which the rotation-generating projection is unlocked in response to further push-into operation of the storage body; and
on the other out of the two end faces, at the exit of the guide passage, there is formed a second abutting face (17) which guides, into the guide passage, the rotation-generating projection which receives the urging force of the first urging member and goes through the guide passage from the exit to the entrance after being unlocked from the latch ditch, pushing the rotation-generating projection for the rotator to perform the relative rotation in the reverse direction against the urging force of the second urging member.

## Patentansprüche

1. Durch Drücken zu betätigendes Schubgehäuse, das Folgendes umfasst:
einen hohlen Hauptgehäusekörper (3) mit einer Öffnung (2) auf einer Seite;
einen Aufnahmekörper (4), der gleitend in dem Hauptgehäusekörper angeordnet ist, wobei der Aufnahmekörper durch die Öffnung zur anderen Seite des Hauptgehäusekörpers hin in diesen hinein geschoben werden kann; und
ein erstes Andrückelement (5) zum konstanten Drücken gegen den Aufnahmekörper, so dass der Aufnahmekörper aus dem Hauptgehäusekörper ausgestoßen wird;
**dadurch gekennzeichnet, dass** das durch Drücken zu betätigende Schubgehäuse ferner Folgendes umfasst:
einen zylindrischen Positionierer (6), der einstückig am Aufnahmekörper in einer solchen Form ausgebildet ist, dass er in der Richtung der Einschubbetätigung des Aufnahmekörpers vorsteht;
Positionierungskerben (7), die entlang der Peripherie des Positionierers ausgebildet sind;
einen zylindrischen Rotator (8), der so angeordnet ist, dass er in der Richtung der Einschubbetätigung des Aufnahmekörpers auf eine solche Weise an dem Positionierer anliegt, dass er diesen in relative Rotation bringen kann;
Eingriffsvorsprünge (9), die entlang der Peripherie des Rotators ausgebildet sind, so dass sie lösbar mit den Positionierungskerben in Eingriff gebracht werden können, um eine Anlageposition zu bestimmen, in der der Rotator durch die mit den Positionierungskerben in Eingriff befindlichen Eingriffsvorsprüngen im Positionierer arretiert und aus dem Eingriff mit den Positionierungskerben gelöst wird, wenn der Rotator den Positionierer in relative Rotation bringt;
ein zweites Andrückelement (10), um den Rotator konstant zum Positionierer hin in der Richtung der Einschubbetätigung des Aufnahmekörpers zu drücken, um die Eingriffsvorsprünge mit den Positionierungskerben in Eingriff zu bringen, um den Rotator an der Anlageposition im Positionierer zu arretieren;
wenigstens einen am Rotator ausgebildeten Rotationserzeugungsvorsprung (11), um den Rotator zu veranlassen, den Positionierer gegen die Andrückkraft des zweiten Andrückelements in relative Rotation zu bringen; und
einen Halter (13), der fest am Hauptgehäusekörper angebracht ist und eine zylindrische Innenfläche aufweist, an der wenigstens ein Steuervorsprung (12) so ausgebildet ist, dass er mit dem Rotationserzeugungsvorsprung zusammenwirkt, um den Aufnahmekörper im Hauptgehäusekörper gegen die Andrückkraft des ersten Andrückelements zu halten, um diesen Zustand jederzeit zu lösen, durch den Positionierer und den Rotator, die sich gemäß der Einschubbetätigung des Aufnahmekörpers bewegen,
wobei der Steuervorsprung ein Paar Endflächen (12a, 12b) aufweist, um auf der zylindrischen Innenfläche Führungskanäle (14) zu definieren, die den Rotationserzeugungsvorsprung von einem Eingang zu einem Ausgang entlang der Richtung der Einschubbetätigung des Aufnahmekörpers führen;
wobei auf einer der beiden Endflächen am Eingang des Führungskanals eine erste Anlagefläche (15) ausgebildet ist, die den sich vom Eingang des Führungskanals zum Ausgang gemäß der Einschubbetätigung des Aufnahmekörpers bewegenden und den Rotationserzeugungsvorsprung schiebenden Rotationserzeugungsvorsprung in den Führungskanal führt, damit der Rotator die relative Rotation in einer normalen Richtung gegen die Andrückkraft des zweiten Andrückelements ausführt;
wobei am Ausgang des Führungskanals eine Rastkerbe (16) ausgebildet ist, mit der der Rotationserzeugungsvorsprung gegen die Andrückkraft des zweiten Andrückelements nach der Passage durch den Führungskanal vom Eingang zum Ausgang arretiert wird, und von der der Rotationserzeugungsvorsprung als Reaktion auf eine weitere Einschubbetätigung des Aufnahmekörpers gelöst wird; und
wobei auf der anderen der beiden Endflächen am Ausgang des Führungskanals eine zweite Anlagefläche (17) ausgebildet ist, die den Rotationserzeugungsvorsprung, der die Andrückkraft des ersten Andrückelements aufnimmt und durch den Führungskanal vom Ausgang zum Eingang läuft, nachdem er aus der Rastkerbe gelöst wurde, und gegen den Rotationserzeugungsvorsprung drückt, um den Rotator zu veranlassen, die relative Rotation in der umgekehrten Richtung gegen die Andrückkraft des zweiten Andrückelements auszuführen, in den Führungskanal führt.

## Revendications

1. Boîtier coulissant actionné par bouton poussoir, comprenant :
un corps de boîtier principal, creux (3) comportant une ouverture (2) sur un de ses côtés ;
un corps de stockage (4) agencé coulissant dans le corps de boîtier principal, le corps de stockage étant conçu pour être poussé dans l'intérieur du corps de boîtier principal par l'ouverture vers l'autre côté du corps de boîtier principal ; et
un premier élément de sollicitation (5) pour pousser en permanence le corps de stockage de manière que le corps de stockage soit éjecté du corps de boîtier principal ;
**caractérisé en ce que** le boîtier coulissant actionné par bouton poussoir comprend, en outre :
un élément de positionnement cylindrique (6) qui est formé d'un seul tenant sur le corps de stockage en une forme faisant saillie dans la direction de l'opération de poussée vers l'intérieur du corps de stockage ;
des évidements de positionnement (7) qui sont ménagés le long de la périphérie de l'élément de positionnement ;
un rotateur cylindrique (8) qui est disposé de manière à buter contre l'élément de positionnement le long de la direction de l'opération de poussée vers l'intérieur du corps de stockage de façon à pouvoir avoir une rotation relativement à l'élément de positionnement ;
des saillies d'engagement (9) qui sont formées le long de la périphérie du rotateur, conçues pour être mises en prise de manière amovible avec les évidements de positionnement de façon à définir une position de fixation dans laquelle le rotateur est verrouillé dans l'élément de positionnement par les saillies d'engagement étant en prise avec les évidements de positionnement, puis dégagées des évidements de positionnement par la rotation du rotateur relativement à l'élément de positionnement ;
un second élément de sollicitation (10) pour pousser en permanence le rotateur vers l'élément de positionnement le long de la direction de l'opération de poussée vers l'intérieur du corps de stockage afin de mettre en prise les saillies d'engagement avec les évidements de positionnement pour verrouiller le rotateur dans l'élément de positionnement à la position fixée ;
au moins une saillie de production de rotation (11) formée sur le rotateur, conçue pour que le rotateur tourne relativement à l'élément de positionnement à l'encontre de la force de sollicitation du second élément de sollicitation ; et
un élément de retenue (13) qui est fixé à demeure au corps de boîtier principal, comportant une surface interne cylindrique dans laquelle est formée au moins une saillie de commande (12) apte à opérer avec la saillie de production de rotation afin de réaliser le maintien du corps de stockage contenu au sein du corps de boîtier principal à l'encontre de la force de sollicitation du premier élément de sollicitation de façon à déverrouiller cet état à tout moment, par l'élément de positionnement et le rotateur qui se déplacent suivant l'opération de poussée vers l'intérieur du corps de stockage,
la saillie de commande comportant une paire de faces d'extrémité (12a, 12b) pour définir, sur la surface interne cylindrique, des passages de guidage (14) qui guident la saillie de production de rotation d'une entrée à une sortie le long de la direction de l'opération de poussée vers l'intérieur du corps de stockage ;
sur l'une ou l'autre des deux faces d'extrémité, à l'entrée du passage de guidage, est formée une première face de butée (15) qui mène, dans le passage de guidage, la saillie de production de rotation qui se déplace de l'entrée du passage de guidage à la sortie suivant l'opération de poussée vers l'intérieur du corps de stockage, poussant la saillie de production de rotation pour que le rotateur effectue sa rotation relative dans une direction normale à l'encontre de la force de sollicitation du second élément de sollicitation ;
à la sortie du passage de guidage est formé un évidement d'encliquetage (16) avec lequel est verrouillée la saillie de production de rotation à l'encontre de la force de sollicitation du second élément de sollicitation après être passée par le passage de guidage de l'entrée à la sortie, et à partir duquel la saillie de production de rotation est déverrouillée en réponse à une opération de poussée plus loin vers l'intérieur du corps de stockage ; et
sur l'autre des deux faces d'extrémité, à la sortie du passage de guidage, est formée une seconde face de butée (17) qui guide, dans le passage de guidage, la saillie de production de rotation qui reçoit la force de sollicitation du premier élément de sollicitation et emprunte le passage de guidage de la sortie à l'entrée après avoir été déverrouillée de l'évidement d'encliquetage, poussant la saillie de production de rotation pour que le rotateur effectue sa rotation relative dans la direction inverse à l'encontre de la force de sollicitation du second élément de sollicitation.
